# EUROPEAN PATENT SPECIFICATION

(11) **EP 4 276 433 B1**
(45) Date of publication and mention of the grant of the patent: **01.10.2025**
(21) Application number: 22173323.1
(22) Date of filing: 13.05.2022
(51) Int. Cl.: G01K 13/02

(54) **METHOD AND APPARATUS FOR MEASURING AND CONTROLLING TEMPERATURE IN A KETTLE**
VERFAHREN UND VORRICHTUNG ZUM MESSEN UND REGELN DER TEMPERATUR IN EINEM KESSEL
PROCÉDÉ ET APPAREIL DE MESURE ET DE CONTRÔLE DE TEMPÉRATURE DANS UNE BOUILLOIRE

(43) Date of publication of application: 15.11.2023
(73) Proprietor: Dietatec Oy, 00880 Helsinki (FI)
(72) Inventor: LITMANEN, Ville-Veikko, 00880 Helsinki (FI); KLIPPI, Valtteri, 00880 Helsinki (FI)
(74) Representative: Laine IP Oy

(56) References cited:
- CN-A- 106 323 494
- CN-A- 106 979 829
- CN-Y- 2 700 882

## Description

### FIELD

This invention relates to measuring and controlling temperature in a cooking vessel, such as a kettle. In particular, the invention relates to measuring and controlling the temperature of food prepared in large cooking kettles for preparing large quantities of food in a professional environment.

### BACKGROUND

The term "kettle", as used in the packaging and processing industry, means a vessel capable of holding a liquid. It usually implies a round bottom and a means of heating or cooling. Sizes may range from a couple litres to a couple hundred gallons.

In modern professional kitchens food processing equipment includes a lotof automation and elements for controlling and measuring the cooking process. One reason for this is process efficiency, another safety requirement that requires exact control of the food making process. One of the variables that has to be monitored and controlled is temperature of food and the temperature of the kettle during heating, cooking and cooling. The temperature during the process affects the taste and structure of food and efficient heating and cooling is needed to prevent contamination or spoiling of the food. Contamination or spoiling may occur if the temperature is allowed to stay too long on a temperature that, for example, allows bacterial growth.

Many kettles have jackets into which steam, hot or chilled water or other heating or cooling fluid may be circulated. A temperature control commonly regulates the flow to maintain a desired temperature. PLCs or other controllers may be used to drive a sophisticated heating and cooling profile. For example, heat the base material quickly to 150 degrees, after adding a flavour heat rapidly to 200 degrees and hole for 1 hour, then cool slowly to 80 degrees for packaging. Gas fired and electrically heated kettles are also generally available. Heating elements may be divided in sections especially when electric heating is used. Cooling elements like water cooling jacket may be provided.

Kettles are often open topped or have a loose fitting lid. Some kettles have a sealed top to withstand internal pressure or vacuum. Pressurization and/or vacuum may be useful in "cooking" some types of food, pharmaceutical or chemical products. Pressure allows a water-based product to achieve temperatures above boiling without evaporating. Vacuum allows liquid to be boiled off while keeping the product at a lower temperature than would be possible in an open kettle.

Some non-viscous products will circulate sufficiently by natural convection to heat evenly. Most products will require some type of mixer. Products with suspended solids will also require a mixer to prevent the particles from settling. Mixers can range from a simple propeller mixer to aid natural convection in a non-viscous product to counter rotating paddles with scrapers in the case of a viscous product. The scrapers are required to prevent the product sticking to the kettle walls.

Kettles are often top loaded by opening the hinged top or through a handhole in a pressurized kettle. Some kettles have piping connections that permit the liquid components to be injected directly. This can be useful to prevent splashing, foaming or air entrainment.

Some kettles are designed to be drained from the bottom. These may have a simple fitting with a ball valve on the bottom. This is generally undesirable unless the diameter of the discharge is fairly large in relation to its length. If not, it forms a "dead leg" in which the product does not circulate well. Particles in suspension may also settle into this deadleg. Kettles with a bottom discharge should have a special, flush, valve to eliminate this deadleg.

Other kettles have no opening in the bottom and are mounted on gimbles. The kettle is emptied by rotating it and dumping the product. This is useful when the process requires rapid dumping or when the product has a lot of solids that will not flow well in piping.

The temperature of the contents of mixing kettles is usually measured by a sensor placed on the sides of the kettle. In a well designed production process and correct mixing the temperature measurement by sensors on the sides of the kettle is reliable and accurate. However, if the contents, for example food, of the kettle is not mixed properly in a desired manner, the reliability of the measurement may deteriorate and be unreliable. This may not be accepted as it may compromise quality and safety of the food being prepared.

Some methods and apparatuses for measuring temperatures in kettles are described in publications CN 106 979 829, CN 2 700 882 and CN 106 323 494.

### SUMMARY OF THE INVENTION

The invention is defined by the features of the independent claims. Some specific embodiments are defined in the dependent claims.

According to a first aspect of the present invention, there is provided a method for measuring temperature in a kettle that comprises a heatable vessel formed by a bottom and a wall and a mixer tool mounted in the vessel and having a rotation axle in the middle of the vessel, the method comprising:
- providing a temperature sensor comprising
   ∘ a wireless transmitter,
   ∘ a sensor element setup connected to the wireless transmitter, comprising at least two temperature sensor elements,
   ∘ a sensor body for the sensor element setup, mountable to the mixing tool so that at least the temperature sensor elements are set radially at a distance from the rotation axle of the mixer tool and on different distances from the bottom of the vessel,
- measuring the temperature within the vessel at least at two points set radially at a distance from the rotation axle of the mixer tool and at different distances from the bottom of the vessel.

According to a second aspect of the present invention, there is provided a kettle comprising
- a heatable vessel formed by a bottom and a wall,
- a mixer tool mounted in the vessel and having a rotation axle in the middle of the vessel,
- a temperature sensor comprising:
   ∘ a wireless transmitter,
   ∘ a sensor element setup connected to the wireless transmitter, comprising at least two temperature sensor elements, and
   ∘ a sensor body for the sensor element setup, mountable to the mixing tool so that at least the temperature sensor elements are set radially at a distance from the rotation axle of the mixer tool and on different distances from the bottom of the vessel.

According to a third aspect of the present invention, there is provided a temperature sensor comprising:
- a wireless transmitter,
- a sensor element setup connected to the wireless transmitter, comprising at least two temperature sensor elements, and
- a sensor body for the sensor element setup, mountable to the mixing tool so that at least the temperature sensor elements are set radially at a distance from the rotation axle of the mixer tool and on different distances from the bottom of the vessel.

In addition to the aspects above, the invention includes several further aspects that may be combined individually or in combination to the aspects above. Some of these aspects are listed below:
- the temperature measurement may be used to control the heating or cooling of the vessel;
- the temperature measurement may be used to control the heating or cooling of the vessel in at least two zones;
- the temperature is measured at three points on different distances from the bottom of the vessel;
- the temperature sensor can be held in one position or rotated within the vessel so that eh measurement point changes during movement of the sensor element;
- the sensor body is configured so that the wireless transmitter can be mounted closer to the rotating axle of the mixer tool than the temperature measurement elements;
- the mixer tool comprises holders for the temperature sensor;
- The sensor body is made of a metal tube, preferably a stainless steel tube.

### BRIEF DESCRIPTION OF THE DRAWINGS

FIGURE 1 illustrates in a cross section a kettle in accordance with at least some embodiments of the present invention;
FIGURE 2 illustrates in a cross section a temperature sensor according to at least some embodiments of the invention;
FIGURE 3 is a top view of the kettle of FIGURE 1, and
FIGURE 4 is another top view of the kettle of FIGURE 1.

### EMBODIMENTS

In the process described further below, the temperature measurement in a kettle is transferred from the mantle of the kettle to the inside space of the kettle. This enables measurement of the temperature directly from the food product being prepared. The measurement is reliable and accurate and multiple measurement points can be used as desired. The temperature measurement is performed by a temperature sensor located the temperature measurement points at a distance from the rotation axle of the mixer tool. Now the temperature is measured in the middle of the mixing zone. The measurement results are transferred to the control processor of the kettle wirelessly.

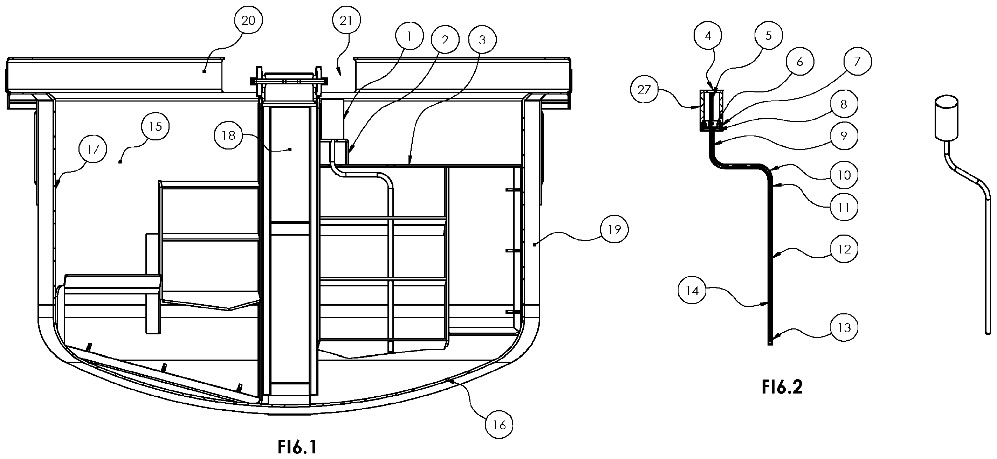

FIGURE 1 illustrates a kettle in accordance with at least some embodiments of the present invention. The kettle comprises a vessel 15 for containing and cooking of the food being prepared. The vessel 15 has a bottom 16 and a wall 17 extending from the bottom and delineating the sides of the vessel. The edge of the wall 17 forms the top of the vessel. A lid may be used to cover the top. In the FIGURES a lid is not shown, but one can be placed on top of the kettle. A collar 20 is located top of the kettle. The lid may have a central opening 21. An axle is placed centrally in the vessel and extends through the opening 21. The axle 18 supports a mixer tool 3. The axle 18 can rotate the mixer tool 3 to mix and agitate the food in the vessel. The shape and type of the mixer tool 3 usually varies according to the foodstuff that is being prepared.

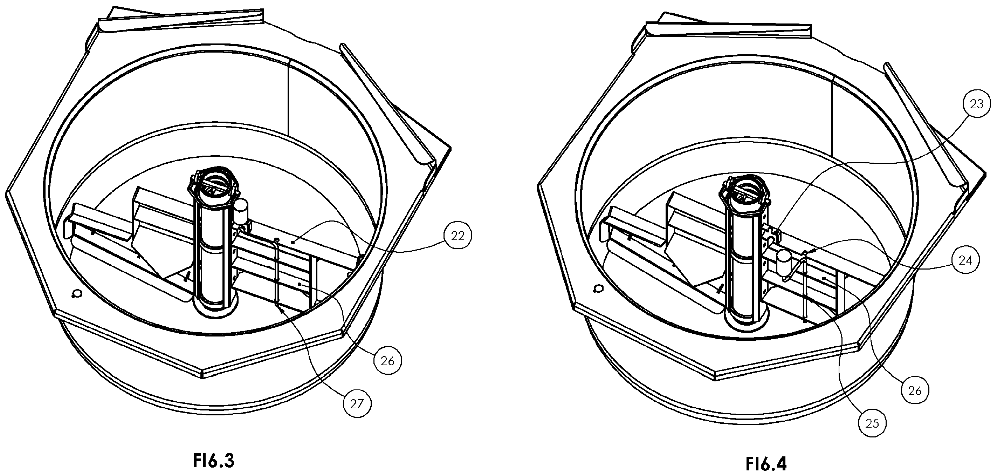

A temperature sensor 1 is mounted on mixer tool 3. In this example, the mounting system includes a sensor mount 2 placed on a top bar 22 of one of the mixer tool blades. The sensor mount is an open box made of sheet metal. The box is open towards the edge of the top bar 22. The top bar 22 and the upper wall on the top bar have aligned grooves 23 for the sensor body 10 (see FIGURES 3 and 4). The top bar 22 has also a removal groove 24 for said sensor body 10. Aligned with the removal groove are three mounting holes 25 on the mixing blades 26.

The temperature sensor has a casing 27 for transmitter circuit board 5. This is, for example, a tube closed by a plastic cap 4 on one end and a bottom of the casing 8 at the opposite end. A sensor body 10 is fixed on the bottom of the casing 8. The sensor body is a tube, preferably a metal tube made of food compatible material such a s stainless steel. Of course, other food compatible materials and body forms may be used. The sensor body 10 extends coaxially with the casing 27 from the bottom of the casing 8 and turns on a side forming a straight angle. From the angle the sensor body extends to a second straight angle and turns in the parallel direction with the part of the body that extends from the bottom 16 of the casing. The sensor body 10 forms a Z-shape. As can be seen from FIGURES 1, 3 and 4, the part of the sensor body 10 extending from the bottom 16 can be placed on aligned grooves 23 of the sensor mount and the top bar 22. The part after the second bend is placed on mounting holes 25 of the mixing blades 26.

Mounting and removal of the sensor element 1 is shown in FIGURES 3 and 4. During mounting and removal the is turned so that the sensor casing 27 is placed on side of the top bar 22 so that the part of the sensor body 10 that is horizontal in mounting position is aligned with the removal groove 24. Now the sensor element can be lifted from the mixer tool 3. When the sensor element is placed on the mixer tool 3, it is simply pushed in a similar way past the removal groove 24 and the sensor casing 27 is turned towards the sensor mount 2 until the sensor body is set on parallel grooves.

The temperature sensor 1 is supported by these mounting elements on the mixer tool 3. This mounting arrangement and shape of the sensor element 1 are simple and easy to use. For example, no moving elements for setting or locking are needed. However, the shapes and dimensions can be varied. Any arrangement where the sensor casing 27 containing the transmitter circuit board 5 is placed at the lid opening to provide transmission of a signal and body shape that allows placing the part of the sensor body containing the temperature sensor elements away from the rotary axle of the mixer tool can be used.

FIGURE 3 illustrates an example sensor element 1 capable of supporting at least some embodiments of the present invention. The sensor element 1 comprises a casing 27 that contains a transmitter circuit board 5. The transmitter circuit board is configured to send a signal including the temperature information, for example using a BLUETOOTH protocol. A wireless transmission is used to omit the need of cabling and complicated connections from the rotating temperature sensor to control logic. Wireless transmission also allows transmitting the signal to several recipients, for example to a central control unit. The transmitter circuit board 5 is held by a mount for transmitter circuit board 5. It holds the transmitter circuit board 5 safely within the casing. The top of the casing 27 is closed by a plastic cap 4 and the bottom of the casing 8 closes the bottom part. The sensor body 10 extends through the bottom of the casing 8. The gap between the sensor body and the bottom of the casing 8 is sealed with an O-ring. The O-ring is made of silicone or other material that withstands the heat and is foodstuff compatible.

The sensor body 10 contains a sensor circuit board 14 and three temperature sensor elements 11, 12, 13. The sensor circuit board 14 and the temperature sensor elements 11, 12, 13 are placed on the end part of the sensor body 10 so that the third temperature sensor element 13 is placed at the extreme tip of the sensor body 10. The second temperature sensor element 12 at a distance from it towards the casing 27 and the first temperature sensor element yet another distance from the second. The distances between the temperature sensor elements are equal. In this way the temperature is measured at the middle of the mixing area from the bottom, middle and top region on the vessel. Of course, the setting and distances as well as the number of the temperature sensor elements can be varied, but three elements provides accurate measurement over the mixing area without using an excessive number of temperature sensor elements. The temperature sensor elements may be thermocouples or other sensors having suitable detection range and size. The sensor circuit board 14 is connected to the transmitter circuit board 5 by a cable 9.

The method and apparatus configurations disclosed herein make preparing food more efficient and especially improve security on food safety. The wireless temperature sensor provides a reliable, accurate and secure way to access temperature of the food within the food batch during cooking, holding and/or cooling process. This is particularly important when mixing of the food is not as good as desired, for example because of the type of ingredients used. In such cases the reliability of other types of temperature measurement may be compromised. Regarding safety of the food and also in the quality viewpoint, such insecurity can not be tolerated. Now, whether during heating or cooling, the wireless temperature sensor provides a multipoint measurement method for controlling whether the temperature is within the risk limits (3 ° - 70°C) and securing that process is kept away from these limits. This secures that dangerous bacteria are neutralized and the food is safe for consumption. The sensor is also a useful tool for achieving optimum cooking time and result for a high quality food.

During the cooling process the temperature of food may drop quickly to the danger zone. It is important to survey that cooling after this is accomplished efficienty. If the process does not operate exactly as designed, the cooling may not occur evenly and the batch of food may be discarded. Therefore it is important to secure that the process has proceeded as desired. The multipoint wireless temperature sensor provides a useful tool for achieving this security. The wireless multipoint measurement provides multiple measuring points in different parts of the food batch. By combining this temperature information a simple but versatile information on process can be obtained. The information can be combined with an automatic HACCP -process (Hard Analysis Critical Point) for obtaining the highest level of food safety.

The temperature measurement may be used for controlling the heating, holding and cooling processes of a kettle in a desired way. For example, if a temperature sensor element detects a temperature out of set limits, heating or cooling may be adjusted. This can be done efficiently by an automatic control system used for operating the kettle.

The multipoint measurement provided by the wireless temperature sensor is efficient way to secure optimal food temperature during cooking. When the optimal temperature is achieved, the kettle may use its intelligent temperature control and energy efficiency that guarantee the energy is used smartly. Further energy efficiency is obtained as temperature control reducesisk of burning, whereby cleaning is facilitated and less water is needed.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention can be used in professional food processes and for providing equipment for such processes.

### REFERENCE SIGNS LIST

- 1: temperature sensor
- 2: sensor mount
- 3: mixer tool
- 4: plastic cap
- 5: transmitter circuit board
- 6: mount for transmitter circuit board
- 7: seal
- 8: bottom of a casing
- 9: cable
- 10: sensor body
- 11: first temperature sensor element
- 12: second temperature sensor element
- 13: third temperature sensor element
- 14: sensor circuit board
- 15: vessel
- 16: bottom
- 17: wall
- 18: axle
- 19: jacket
- 20: collar
- 21: lid opening
- 22: top bar
- 23: aligned grooves
- 24: removal groove
- 25: mounting hole
- 26: mixing blade
- 27: casing

## Claims

1. A method for measuring temperature in a kettle that comprises a heatable vessel formed by a bottom (16) and a wall (17) and a mixer tool (3) mounted in the vessel and having a rotation axle (18) in the middle of the vessel, the method comprising:
- providing a temperature sensor, comprising
∘ a wireless transmitter (5),
∘ a sensor element setup (11, 12, 13, 14) connected to the wireless transmitter (5), comprising at least two temperature sensor elements,
∘ a sensor body (10) for the sensor element setup (11, 12, 13, 14), mountable to the mixing tool (3) so that at least the temperature sensor elements (11, 12, 13) are set radially at a distance from the rotation axle (18) of the mixer tool (3) and at different distances from the bottom (16) of the vessel, and
measuring the temperature within the vessel at least at two points set radially at a distance from the rotation axle of the mixer tool and at different distances from the bottom (16) of the vessel
**characterized** of
placing the temperature sensor on the the mixer tool (3) comprising a sensor mount (2) and at least one mounting hole (25) on at least one mixing blade for the sensor body (10) and a removal groove (24) made on a top bar of the mixer tool (5) and aligned with the at least one mounting hole (25).

2. A method according to the claim 1, wherein the temperature measurement is used to control the heating and/or cooling of the vessel.

3. A method according to the claim 2, wherein the temperature measurement is used to control the heating and/or cooling of the vessel in at least two zones.

4. A method according to any of the previous claims, wherein the temperature is measured at three points (11, 12, 13) on different distances from the bottom (16) of the vessel.

5. A kettle comprising
- a heatable vessel formed by a bottom (16) and a wall (17),
- a mixer tool (3) mounted in the vessel and having a rotation axle (18) in the middle of the vessel,
- a temperature sensor comprising:
∘ a wireless transmitter (5),
∘ a sensor element setup (11, 12, 13, 14) connected to the wireless transmitter (5), comprising at least two temperature sensor elements, and
∘ a sensor body (10) for the sensor element setup (11, 12, 13, 14), mountable to the mixer tool (3) so that at least the temperature sensor elements (11, 12, 13) are set radially at a distance from the rotation axle (18) of the mixer tool (3) and on different distances from the bottom (16) of the vessel
**characterized in that** the
∘ the mixer tool (3) comprises a sensor mount (2) and at least one mounting hole (25) on at least one mixing blade for the sensor body (10) and a removal groove (24) made on a top bar of the mixer tool (3) and aligned with the at least one mounting hole (25).

6. A kettle according to the claim 5, comprising a process control unit for controlling at least heating of the kettle and connected wirelessly to the temperature sensor.

7. A kettle according to the claim 5 or 6, wherein the temperature sensor comprises three temperature measurement elements (11, 12, 13).

8. A kettle according to the claims 5 - 7, wherein the mixer tool (3) comprises a sensor mount (2) and at least one mounting hole (25) on at least one mixing blade for the sensor body (10).

9. A temperature sensor comprising:
- a wireless transmitter (5),
- a sensor element setup (11, 12, 13, 14) connected to the wireless transmitter (5), comprising at least two temperature sensor elements, and
- a sensor body (10) for the sensor element setup (10), configured to be mountable to the mixer tool (3) so that at least the temperature sensor elements (11, 12, 13) are set radially at a distance from the rotation axle (18) of the mixer tool (3) and on different distances from the bottom (16) of the vessel,
**characterized in that**
- the temperature sensor is configured to be mountable to a mixer tool (3) comprising a sensor mount (2) and at least one mounting hole (25) set radially at a distance from the rotational axle of the mixer tool on at least one mixing blade for the sensor body (10) and a removal groove (24) made on a top bar of the mixer tool (5) and aligned with the at least one mounting hole (25).

10. A temperature sensor according to the claim 10, comprising a casing (27) and a sensor body (10) having a shape of a Z, wherein the first end of the Z extends coaxially from the sensor body (10) and the distal part of the Z-shaped sensor body is parallel to the first end and set a t a distance from it.

11. A temperature sensor according to the claim 10 or 11, comprising three temperature measurement elements (11, 12, 13).

12. A temperature sensor according to the claim 11 or 12, wherein the temperature measurement elements (11, 12, 13) are placed on the distal part of the sensor body spaced apart from each other.

13. A temperature sensor according to any of the claims 10 -13, wherein the sensor body is a metal tube, preferably a stainless steel tube.

## Patentansprüche

1. Verfahren zum Messen der Temperatur in einem Kessel, der ein beheizbares Gefäß, das durch einen Boden (16) und eine Wand (17) gebildet wird, und ein Mischerwerkzeug (3) umfasst, das in dem Gefäß montiert ist und eine Drehachse (18) in der Mitte des Gefäßes aufweist, wobei das Verfahren umfasst:
- Bereitstellen eines Temperatursensors, umfassend
- einen drahtlosen Sender (5),
- eine Sensorelementanordnung (11, 12, 13, 14), die mit dem drahtlosen Sender (5) verbunden ist und mindestens zwei Temperatursensorelemente umfasst,
- einen Sensorkörper (10) für die Sensorelementanordnung (11, 12, 13, 14), der am Mischwerkzeug (3) montierbar ist, sodass mindestens die Temperatursensorelemente (11, 12, 13) radial in einem Abstand von der Drehachse (18) des Mischerwerkzeugs (3) und in unterschiedlichen Abständen vom Boden (16) des Gefäßes gesetzt sind, und
Messen der Temperatur innerhalb des Gefäßes an mindestens zwei Punkten, die radial in einem Abstand von der Drehachse des Mischerwerkzeugs und in unterschiedlichen Abständen vom Boden (16) des Gefäßes gesetzt sind,
**gekennzeichnet durch**
Platzieren des Temperatursensors auf dem Mischerwerkzeug (3), das eine Sensorhalterung (2) und mindestens ein Montageloch (25) auf mindestens einem Mischflügel für den Sensorkörper (10) und eine Entfernungsrille (24) umfasst, die auf einer oberen Stange des Mischerwerkzeugs (5) gefertigt, und mit dem mindestens einen Montageloch (25) ausgerichtet ist.

2. Verfahren nach Anspruch 1, wobei die Temperaturmessung verwendet wird, um das Erwärmen und/oder Abkühlen des Gefäßes zu steuern.

3. Verfahren nach Anspruch 2, wobei die Temperaturmessung verwendet wird, um das Erwärmen und/oder Abkühlen des Gefäßes in mindestens zwei Zonen zu steuern.

4. Verfahren nach einem der vorstehenden Ansprüche, wobei die Temperatur an drei Punkten (11, 12, 13) in unterschiedlichen Abständen vom Boden (16) des Gefäßes gemessen wird.

5. Kessel, umfassend
- ein beheizbares Gefäß, das durch einen Boden (16) und eine Wand (17) gebildet ist, und
- ein Mischerwerkzeug (3), das in dem Gefäß montiert ist und eine Drehachse (18) in der Mitte des Gefäßes aufweist,
- einen Temperatursensor, umfassend:
- einen drahtlosen Sender (5),
- eine Sensorelementanordnung (11, 12, 13, 14), die mit dem drahtlosen Sender (5) verbunden ist und mindestens zwei Temperatursensorelemente umfasst, und
- einen Sensorkörper (10) für die Sensorelementanordnung (11, 12, 13, 14), der am Mischerwerkzeug (3) montierbar ist, sodass mindestens die Temperatursensorelemente (11, 12, 13) radial in einem Abstand von der Drehachse (18) des Mischerwerkzeugs und an unterschiedlichen Abständen vom Boden (16) des Gefäßes gesetzt sind,
**dadurch gekennzeichnet, dass**
- das Mischerwerkzeug (3) eine Sensorhalterung (2) und mindestens ein Montageloch (25) auf mindestens einem Mischflügel für den Sensorkörper (10) und eine Entfernungsrille (24) umfasst, die auf einer oberen Stange des Mischerwerkzeugs (3) gefertigt, und mit dem mindestens einen Montageloch (25) ausgerichtet ist.

6. Kessel nach Anspruch 5, umfassend eine Prozesssteuereinheit zur Steuerung von mindestens des Erwärmens des Kessels und, die drahtlos mit dem Temperatursensor verbunden ist.

7. Kessel nach Anspruch 5 oder 6, wobei der Temperatursensor drei Temperaturmesselemente (11, 12, 13) umfasst.

8. Kessel nach den Ansprüchen 5-7, wobei das Mischerwerkzeug (3) eine Sensorhalterung (2) und mindestens ein Montageloch (25) an mindestens einem Mischflügel für den Sensorkörper (10) umfasst.

9. Temperatursensor, umfassend:
- einen drahtlosen Sender (5),
- eine Sensorelementanordnung (11, 12, 13, 14), die mit dem drahtlosen Sender (5) verbunden ist und mindestens zwei Temperatursensorelemente umfasst, und
- einen Sensorkörper (10) für die Sensorelementanordnung (10), der am Mischerwerkzeug (3) montierbar ist, sodass mindestens die Temperatursensorelemente (11, 12, 13) radial in einem Abstand von der Drehachse (18) des Mischerwerkzeugs (3) und an unterschiedlichen Abständen vom Boden (16) des Gefäßes gesetzt sind,
**dadurch gekennzeichnet, dass**
- der Temperatursensor konfiguriert ist, um an einem Mischerwerkzeug (3) montierbar zu sein, das eine Sensorhalterung (2) und mindestens ein Montageloch (25) umfasst, das radial in einem Abstand von der Drehachse des Mischerwerkzeugs auf mindestens einem Mischflügel für den Sensorkörper (10) gesetzt ist, und eine Entfernungsrille (24), die auf einer oberen Stange des Mischerwerkzeugs (5) gefertigt ist und mit dem mindestens einen Montageloch (25) ausgerichtet ist.

10. Temperatursensor nach Anspruch 10, umfassend ein Gehäuse (27) und einen Sensorkörper (10), der die Form eines Z aufweist, wobei sich das erste Ende des Z koaxial von dem Sensorkörper (10) erstreckt und der distale Teil des Z-förmigen Sensorkörpers parallel zum ersten Ende verläuft und in einem Abstand davon gesetzt ist.

11. Temperatursensor nach Anspruch 10 oder 11, der drei Temperaturmesselemente (11, 12, 13) umfasst.

12. Temperatursensor nach Anspruch 11 oder 12, wobei die Temperaturmesselemente (11, 12, 13) am distalen Teil des Sensorkörpers voneinander beabstandet platziert sind.

13. Temperatursensor nach einem der Ansprüche 10-13, wobei der Sensorkörper ein Metallrohr, vorzugsweise ein Edelstahlrohr, ist.

## Revendications

1. Procédé de mesure de la température dans une marmite comprenant un récipient pouvant être chauffé formé d'un fond (16) et d'une paroi (17), et un outil mélangeur (3) monté dans le récipient et présentant un axe de rotation (18) au milieu du récipient, le procédé comprenant :
- la fourniture d'un capteur de température, comprenant
∘ un émetteur sans fil (5),
∘ un agencement d'éléments de capteur (11, 12, 13, 14) connecté à l'émetteur sans fil (5), comprenant au moins deux éléments de capteur de température,
∘ un corps de capteur (10) pour l'agencement d'éléments de capteur (11, 12, 13, 14), pouvant être monté sur l'outil de mélange (3) de sorte qu'au moins les éléments de capteur de température (11, 12, 13) soient définis radialement à une certaine distance de l'axe de rotation (18) de l'outil mélangeur (3) et à différentes distances du fond (16) du récipient, et
la mesure de la température à l'intérieur du récipient au moins en deux points définis radialement à une distance de l'axe de rotation de l'outil mélangeur et à différentes distances du fond (16) du récipient
**caractérisé par**
la mise en place du capteur de température sur l'outil mélangeur (3) comprenant une monture de capteur (2) et au moins un trou de montage (25) sur au moins une lame de mélange pour le corps de capteur (10) et une rainure de retrait (24) réalisée sur une barre supérieure de l'outil mélangeur (5) et alignée sur le ou les trous de montage (25).

2. Procédé selon la revendication 1, dans lequel la mesure de température est utilisée pour commander le chauffage et/ou le refroidissement du récipient.

3. Procédé selon la revendication 2, dans lequel la mesure de température est utilisée pour commander le chauffage et/ou le refroidissement du récipient dans au moins deux zones.

4. Procédé selon l'une quelconque des revendications précédentes, dans lequel la température est mesurée en trois points (11, 12, 13) situés à différentes distances du fond (16) du récipient.

5. Marmite comprenant
- un récipient pouvant être chauffé formé d'un fond (16) et d'une paroi (17),
- un outil mélangeur (3) monté dans le récipient et présentant un axe de rotation (18) au milieu du récipient,
- un capteur de température comprenant :
∘ un émetteur sans fil (5),
∘ un agencement d'éléments de capteur (11, 12, 13, 14) connecté à l'émetteur sans fil (5), comprenant au moins deux éléments de capteur de température, et
∘ un corps de capteur (10) pour l'agencement d'éléments de capteur (11, 12, 13, 14), pouvant être monté sur l'outil mélangeur (3) de sorte qu'au moins les éléments de capteur de température (11, 12, 13) soient définis radialement à une certaine distance de l'axe de rotation (18) de l'outil mélangeur et à différentes distances du fond (16) du récipient, et
**caractérisée en ce que**
- l'outil mélangeur (3) comprend une monture de capteur (2) et au moins un trou de montage (25) sur au moins une lame de mélange pour le corps de capteur (10) et une rainure de retrait (24) réalisée sur une barre supérieure de l'outil mélangeur (3) et alignée sur le ou les trous de montage (25).

6. Marmite selon la revendication 5, comprenant une unité de commande de processus pour commander au moins un chauffage de la marmite et connectée sans fil au capteur de température.

7. Marmite selon la revendication 5 ou 6, dans laquelle le capteur de température comprend trois éléments de mesure de température (11, 12, 13).

8. Marmite selon les revendications 5-7, dans laquelle l'outil mélangeur (3) comprend une monture de capteur (2) et au moins un trou de montage (25) sur au moins une lame de mélange pour le corps de capteur (10).

9. Capteur de température comprenant :
- un émetteur sans fil (5),
- un agencement d'éléments de capteur (11, 12, 13, 14) connecté à l'émetteur sans fil (5), comprenant au moins deux éléments de capteur de température, et
- un corps de capteur (10) pour l'agencement d'éléments de capteur (10), configuré pour pouvoir être monté sur l'outil mélangeur (3) de sorte qu'au moins les éléments de capteur de température (11, 12, 13) soient définis radialement à une certaine distance de l'axe de rotation (18) de l'outil mélangeur (3) et à différentes distances du fond (16) du récipient, et
**caractérisé en ce que**
- le capteur de température est configuré pour pouvoir être monté sur un outil mélangeur (3) comprenant une monture de capteur (2) et au moins un trou de montage (25) défini radialement à une distance de l'axe de rotation de l'outil mélangeur sur au moins une lame de mélange pour le corps de capteur (10), et une rainure de retrait (24) réalisée sur une barre supérieure de l'outil mélangeur (5) et alignée sur le ou les trous de montage (25).

10. Capteur de température selon la revendication 10, comprenant un boîtier (27) et un corps de capteur (10) en forme de Z, dans lequel la première extrémité du Z s'étend coaxialement à partir du corps de capteur (10) et la partie distale du corps de capteur en forme de Z est parallèle à la première extrémité et définie à une distance de celle-ci.

11. Capteur de température selon la revendication 10 ou 11, comprenant trois éléments de mesure de température (11, 12, 13).

12. Capteur de température selon la revendication 11 ou 12, dans lequel les éléments de mesure de température (11, 12, 13) sont placés sur la partie distale du corps de capteur à distance les uns des autres.

13. Capteur de température selon l'une quelconque des revendications 10-13, dans lequel le corps de capteur est un tube métallique, de préférence un tube en acier inoxydable.
